Europäisches Patentamt

European Patent Office

Office européen des brevets

(11) Publication number: **0 249 493 B1**

## EUROPEAN PATENT SPECIFICATION

(45) Date of publication of patent specification: **02.03.94**  (51) Int. Cl.⁵: **G01S 13/93**, G01S 13/76

(21) Application number: **87305229.4**

(22) Date of filing: **12.06.87**

(54) **Aircraft collision warning system.**

(30) Priority: **13.06.86 GB 8614408**

(43) Date of publication of application:
**16.12.87 Bulletin 87/51**

(45) Publication of the grant of the patent:
**02.03.94 Bulletin 94/09**

(84) Designated Contracting States:
**DE FR GB IT NL**

(56) References cited:
DE-A- 2 229 193  US-A- 2 524 993
US-A- 2 826 756  US-A- 3 208 064
US-A- 3 427 621  US-A- 3 434 141
US-A- 3 665 471  US-A- 3 750 168
US-A- 3 851 334

(73) Proprietor: **COSSOR ELECTRONICS LIMITED**
**The Pinnacles**
**Harlow Essex CM19 5BB(GB)**

(72) Inventor: **Watson, Brian Walter**
**15 Coney Gree**
**Sawbridgeworth Hertfordshire(GB)**

(74) Representative: **Pears, David Ashley et al**
**REDDIE & GROSE**
**16 Theobalds Road**
**London WC1X 8PL (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

**Description**

The present invention relates to an aircraft collision warning system (CWS), particularly a system which can be added at relatively small cost and with little extra weight to existing aircraft. Particularly with high performance jet aircraft, the risks of mid-air collision are extremely serious. For various reasons an aircraft on collision course may not be spotted, a collision may take place or violent and dangerous evasive action may be required at the last minute.

There are many different radar implementations which could be considered for providing a CWS. The basic principles of radar detection of targets and determination of their range are extremely well-known. It is also extremely well known to determine target direction by interferometric principles, i.e. detection of relative phases at spaced antennas.

An example of a known CWS is described in US-A-3750168 to Schrader et al. In the Schrader system, each cooperating aircraft is fitted with a purpose-built transponder: a protected aircraft additionally carries a transmitter, receiver and data processor. The transmitter of the protected aircraft continuously transmits a signal to the transponders of all cooperating aircraft in the vicinity. The transponder of each cooperating aircraft is configured to add the altitude of that aircraft to the received signal and then transmit it back to the protected aircraft. The receiver and data processor of the protected aircraft then determine the closing velocity, range and altitude difference between the protected and a most hazardous cooperating aircraft and the time to a possible collision.

By using a pair of spaced receiver antennae, the Schrader system is able to determine the bearing of a responding cooperating aircraft from the relative phases of the reply received at each antenna. An example of a suitable twin antenna arrangement, comprising a pair of sharksfin antennae with feedline delays, is described in US-A-2826756 to Cary.

A further example of a CWS is described in US-A-3851334 to Coleman et al. Coleman differs from the Schrader system in the use of a circular antenna system coupled with a multi-mode feed network, rather than a pair of spaced antennae, to provide collision warning in two dimensions. For use with aircraft, Coleman proposes the separate encoding by transponder of altitude information to extend coverage to three dimensions.

The problem underlying the present invention is to provide a system which can be fitted into aircraft which already have densely packed airframes and cockpits. The equipment must be small and lightweight. Moreover the antenna system for the equipment must be suitable for adding to various types of aircraft. Finally the equipment must be reasonably inexpensive.

According to the present invention, there is provided an aircraft collision warning system operable to detect aircraft equipped with transponders, as set forth in claim 1 below.

By making use of existing IFF transponders, and using a simple interferometric technique to obtain bearing information, the invention achieves its objective with very little added weight or expense. The use of IFF transponders has many advantages:

(1) The 'question and answer' IFF principle is appropriate to the requirement to provide a positive warning indication.

(2) In a typical situation, all aircraft will already be equipped with IFF transponders and hence possess one end of the cooperative 'link'.

(3) Omnidirectional cover (or substantially so) is provided by the transponder antenna system.

(4) IFF operates on fixed carrier frequences, therefore avoiding the need for channelization and the problems associated with channel selection.

(5) The modulation format is defined, so that the interrogation and reply formats are well characterised.

(6) Operationally the system should be available (or can be made so) at all times.

(7) The IFF environment will tolerate, and not be adversely affected by, the use of the system for CWS purposes.

The interrogating transmitter need only be a low power device providing operation over short ranges e.g. up to 10 nautical miles, (18.5 km). Accordingly, the required cover can be provided by a relatively low gain, fixed antenna array on the 'interrogating' aircraft.

Whereas a visual CWS display could be provided on an existing CRT in the aircraft cockpit, a separate dedicated display is highly desirable. A dedicated display can be a robust and relatively simple design, and ensure that the system remains 'stand alone' so minimizing installation and interfacing complexity. In addition, manual control facilities are desirable for the CWS, and these can be conveniently provided at the display panel.

Interferometry is used in preference to monopulse techniques to determine 'target' azimuth, because interferometry can give the spatial cover and resolution for the CWS application with a less complex

EP 0 249 493 B1

antenna and processing system, thus providing a more cost effective solution.

The system preferably includes alarm means which alert the aircrew when a collision hazard exists, e.g. another aircraft within a range of 5 nautical miles, 9 km.

The invention will be described in more detail by way of example, with reference to the accompanying drawings, in which:

Fig 1 is a block diagram of a system embodying the invention,

Fig 2 is a diagram showing the interferometric principle employed,

Fig 3 shows an antenna array,

Fig 4 is a block diagram of the RF unit,

Fig 5 is a circuit diagram of a correlator network,

Fig 6 is a block diagram of a warning processor,

Fig 7 is a block diagram of a transmitter, and

Fig 8 shows the preferred antenna array.

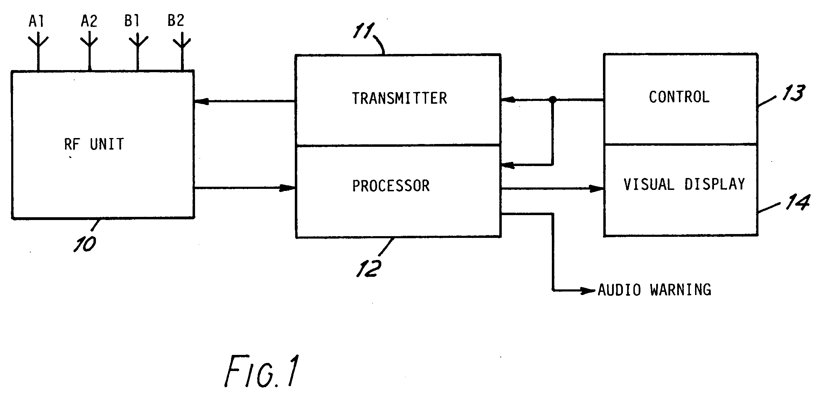

The system shown in Fig 1 comprises an array of radiators A1, A2, B1, B2 with an associated RF unit 10. As will be seen below the radiators A1 and A2 are longitudinally spaced and operate as a single antenna unit (channel A). Similarly B1 and B2 operate as a single antenna unit (B channel) which is laterally spaced from the A channel antenna. The system also comprises a transmitter 11, a processor 12 for transponder returns, a control unit 13 and a visual display 14. The processor 12 also provides an audible warning signal when there is a collision hazard.

Referring to Fig 2 and considering just the two antennas A and B, which are transversely in line with each other, WW represents a plane wavefront arriving from a source at an angular position $\theta$.

The phase difference between the two receiver channels is given by:

$$\phi = (2piS/L) \sin\theta$$

where:

$S$      is the antenna spacing, and

$L$      is the signal wavelength

The rate of change of phase with angle is:

$$d\phi/d\theta = (2piS/L) \cos \theta$$

This shows that phase measurement accuracy will improve with increased antenna spacing. However, the system measures phase differences between 0 and 2pi and cannot discriminate between multiples of 2pi which would occur when the signal path difference between the two antennas exceeds one wavelength. Therefore, there is a maximum spacing permissible between two antennas which ensures unambiguous outputs.

The system shown in Fig 1 is essentially a low power IFF interrogator system with an on-board display/warning system to indicate to the aircrew the presence and azimuthal angle of other aircraft in the forward hemisphere.

The equipment will interrogate Models 1,2,3/A and C in sequence, and any aircraft with an operating transponder that is in range will respond. The equipment will be optimized for detection at 10 n miles (18.5 km) range in clear line of sight conditions, and will be programmed to produce warning data of a 'major' threat if a collision is predicted at 5 n miles (9 km) range. This will cater for a worst case situation of two aircraft closing at a combined speed of up to 18 miles a minute (33 km/min), and would give the pilot appoximately 16 seconds in which to react. In different situations with slower closing rates then the reaction time will be correspondingly longer.

The processed outputs from the equipment produce both visual and audio data. The audio data is fed into the aircraft intercom system to give audio warning signals or stored speech messages to the aircrew. The visual data can be presented in a variety of formats to suit individual cockpit requirements. The processing unit is programmed to present the pilot with simple, easy to assimilate information in a time-frame that will allow any necessary avoiding action to be taken.

It is anticipated that the system will be capable of indicating the azimuth of 'target' aircraft within nominal 10 degree sectors. No elevation angle will be available, but provision of this information is not seen as an operational necessity.

The rf unit 10 is also low-cost, light-weight and compact. It switches transmissions between the interrogate and SLS functions and processes the received signal to give the direction of the replying aircraft.

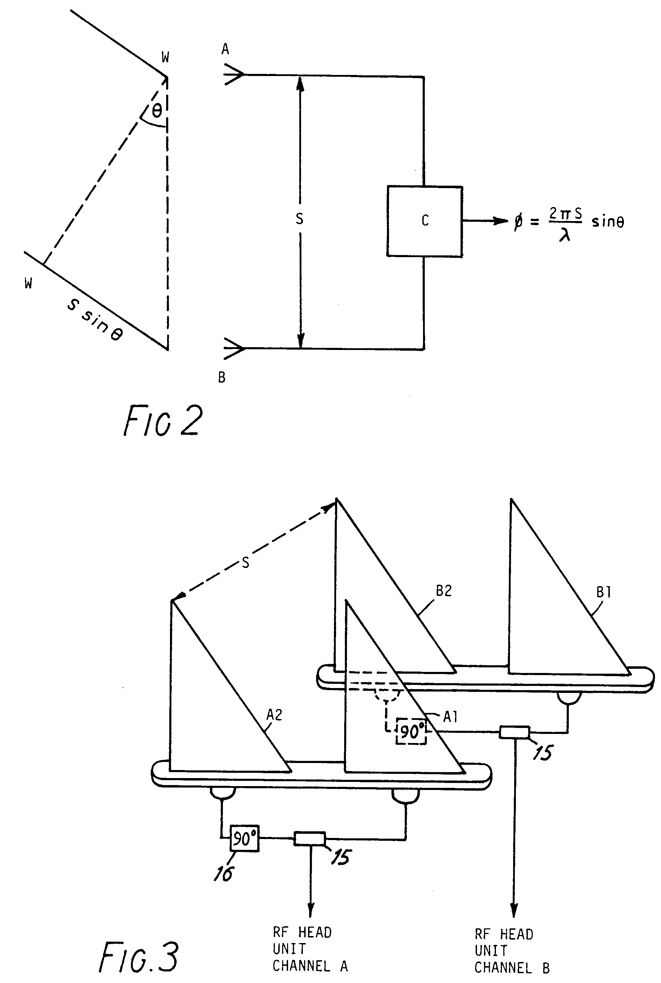

The antenna units (Fig 3) are positioned on top of the fuselage along a horizontal axis normal to the longitudinal axis of the aircraft. In order to satisfy the ambiguity and coverage requirements, an antenna spacing S of approximately 130 mm will be required (allowing for mutual coupling effects etc). Each antenna unit consists of a pair of 'sharksfin' radiators A1, A2 and B1, B2 longitudinally spaced along the aircraft, with a nominal spacing of about a quarter of a wavelength (again affected by mutual coupling). Each channel is coupled to its two radiators by a hybrid power divider 15 and a fixed 90° phase shift 16 is incorporated into one of the feeder arms which, with the geometry of the antenna, forms a beam in the forward direction. In practice the power dividing and phase shift operations would be performed by a single known device, a quadrature hybrid coupler.

Obviously, other types of antenna could be used in place of sharksfin antennae.

The predicted characteristics of the antenna system are as follows:

| Azimuth half power beamwidth | 120° |
|---|---|
| Elevation half power beamwidth | 60° |
| Coverage | Azimuth ± 60° |
| | Elevation 0-60° |
| Gain | 5.7 dBi |
| Polarization | Vertical |

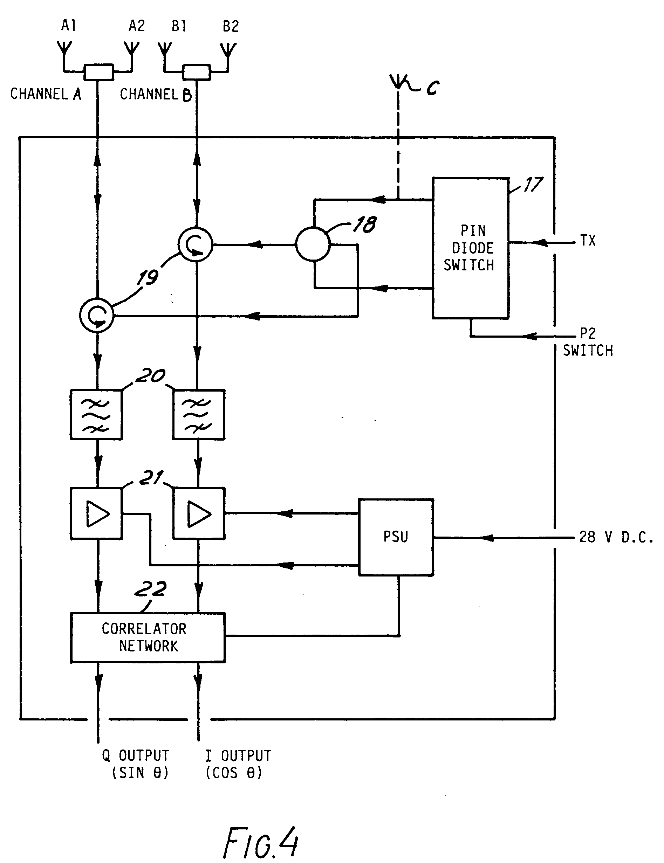

A block diagram showing the RF unit 10 is shown in Fig. 4. The transmitter is connected to a switch 17 which directs the signal to one of two ports of a hybrid ring 18 under control of a signal P2. This phases the antennas to form a sum pattern for interrogation and a control (difference) pattern for sidelobe suppression. The transmit channel is isolated from the receiver channel by a pair of circulators 19.

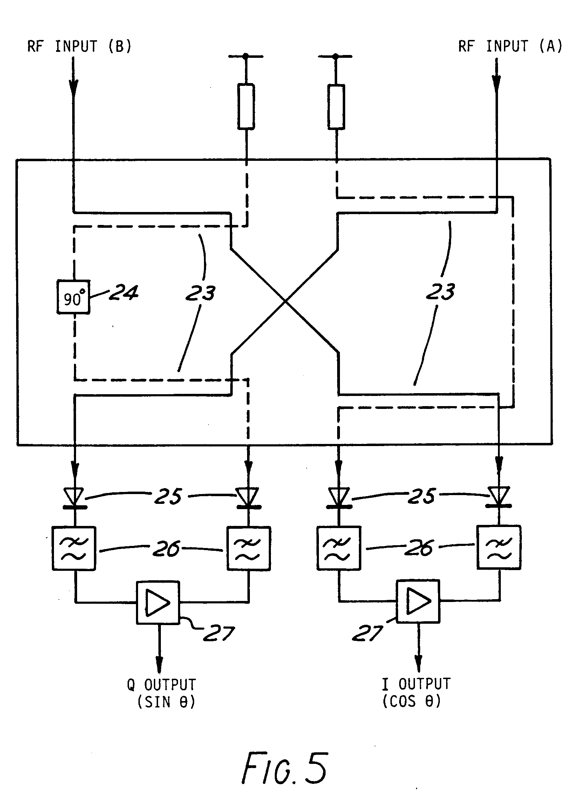

The signals received by each antenna are fed through separate channels A and B where they are filtered through stripline bandpass filters 20 and then amplified by low noise amplifiers 21. The two signals are then compared in a phase correlator 22. This is a stripline device (Fig 5) consisting of four 90° couplers 23 and one fixed 90° phase shifter 24 connected as shown. The four outputs from the coupler network are square-law detected by detectors 25 and fed through stripline low-pass filter 26 before feeding to two differential amplifiers 27. The outputs of the differential amplifiers are video signals proportional to $\sin(A - B)$ and $\cos(A - B)$ where $(A - B)$ is the relative phase angle between the two input signals. The angular position of the source, being a function of the differential phase shift, can thus be determined.

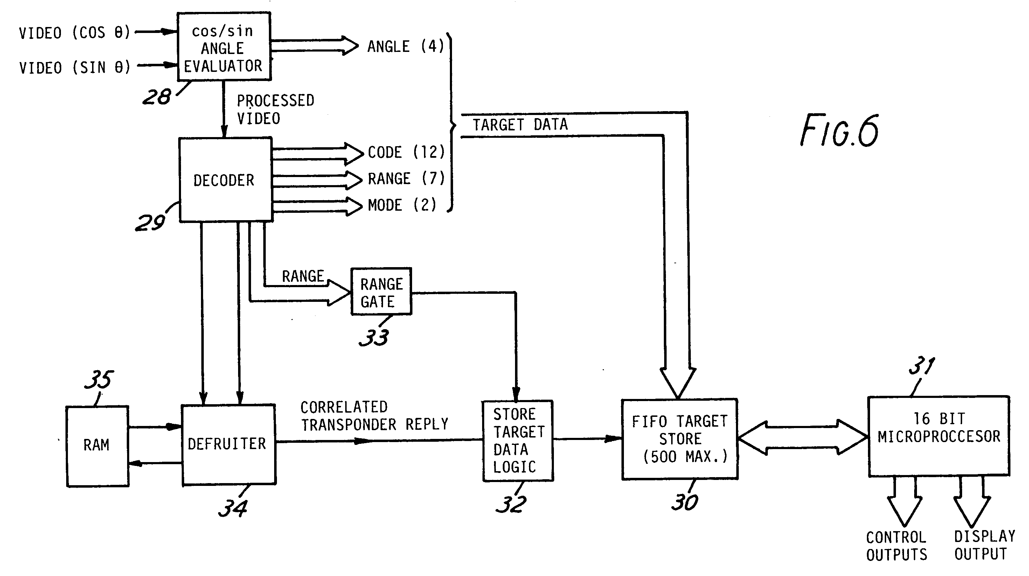

The warning processor 12 is shown in Fig 6 and utilizes processing devices known in themselves. An angle evalutor 28 processes the video sine and cosine signals to provide a 4-bit ANGLE signal. A decoder 29 decodes the processed video to derive the 12-bit identifying CODE of the transponder which has replied, a 7-bit RANGE signal and a 2-bit MODE signal. The target data thus acquired is fed into a first-in, first-out store 30 to provide data to a microprocessor 31 which can process the stored data in ways well known per se to identify aircraft which are on a potential collision course, provide for display of such aircraft on the display 14 and, when there is a real hazard, activate the audio alarm.

In order to avoid processing rubbish, a logic circuit 32 selects which replies are actually entered in the store 30, first by range selection in response to a range gate 33, secondly in dependence upon a signal from a defruiter 34 which operates in conjunction with its own RAM 35 to signal when there is a correlated transponder reply.

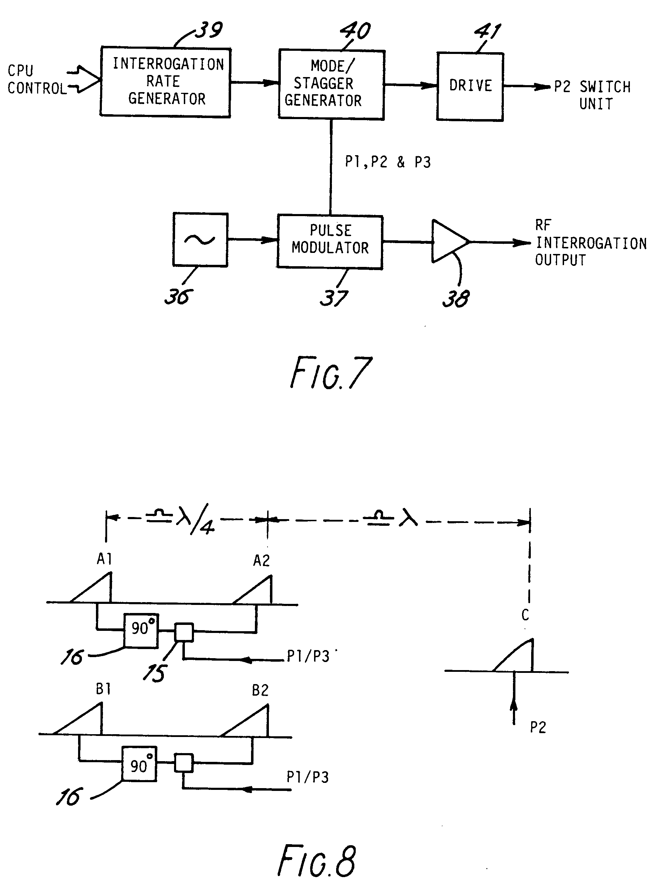

The transmitter (Fig 7) comprises a master oscillator 36 and pulse modulator 37 which is controlled by consecutive P1, P2 and P3 pulses as is well known in IFF and other secondary radar systems. The RF pulses are amplified by an amplifier 38 whose output is fed to the switch 17 (Fig 4). The control unit 13 of Fig 1 allows for various operator controls including ON/OFF and selection of interrogation rate. The microprocessor 31 of Fig 6 acts in accordance with the selected rate to control an interrogation rate generator 39 (Fig 7) which triggers a mode/stagger generator 40. This Mode and Stagger Generator LSI device is controlled by the CPU and generates correctly spaced interrogation pulses P1 and P3, together with the SLS pulse P2, for each mode. Stagger is used on the interrogations to prevent the CWS synchronizing with interrogators of other IFF, CWS or ground IFF/SSR systems, and vice versa. The low-power of the transmissions used in the CWS is also intended to prevent large scale interference to ground systems by limiting fruit levels.

The P2 pulse also controls the switch 17 via a driver 41.

Sidelobe suppression takes place in an entirely conventional manner at the target transponder. As is well known the P2 "control" pulse is radiated non-directionally at a level such that, at a receiving transponder, the received signal is smaller than the main beam P1 signal but larger than the P1 side lobes. It has been found difficult to achieve this situation if the control pulse radiation pattern is simply the difference pattern of the A and B antenna units; this difference pattern may not cover some rearward P1 side lobes. For this reason, a fifth radiator C may be added (Fig. 8) to radiate P2. In this case, the switched output of the switch 17 (Fig 4) is not fed to the hybrid ring 18 but directly to the antenna C, as shown in broken lines in Fig 4. The antenna C is on the centre-line of the aircraft, midway between the A and B units and approximately one wavelength behind these units.

## Claims

1. An aircraft collision warning system operable to detect aircraft equipped with transponders, comprising two laterally spaced antenna units (A1, A2 and B1, B2) mounted on an aircraft, an interrogating transmitter (11) arranged to repeatedly transmit interrogating signals by way of at least one of the antenna units into the airspace ahead of the aircraft, a receiver (12) arranged to receive and process transponder replies reaching the two antenna units so as to provide range information in dependence upon the delay between an interrogating signal and a reply thereto and bearing information in dependence upon the relative phases of the reply at the two antennas, characterized in that the system is adapted to operate in conjunction with IFF transponders, with the interrogating transmitter (11) and receiver (12) being configured to respectively trigger and detect replies from such IFF transponders, the system further comprising display means (14) responsive to the range and bearing information to show the position of an aircraft in the airspace ahead of the aircraft which has given rise to a reply and is a potential collision hazard.

2. A system according to claim 1, wherein each antenna unit comprises at least one sharksfin radiator (A1, A2, B1, B2).

3. A system according to claim 1 or 2, wherein each antenna unit comprises a plurality of longitudinally spaced radiators (A1, A2 and B1, B2) with feedline delays (16) such as to bring the signals pertaining thereto into phase in the antenna channel.

4. A system according to claim 1, 2 or 3 wherein the receiver comprises a correlator network (22) which processes the RF signals from the two antenna units to provide in-phase and quadrature outputs proportional to the sine and cosine of the bearing angle.

5. A system according to any of claims 1 to 4, comprising alarm means which provide an alerting alarm when a collision hazard exists.

6. A system according to claim 5, wherein the alarm means provide an audible alarm.

7. A system according to any of claims 1 to 6, wherein the aircraft is further equipped with a non-directional antenna (C) and the interrogating transmitter transmits an interrogating pulse (P1,P3) on the sum pattern of the two antenna units (A1, A1 and B1, B2) and a sidelobe suppression control pulse (P2) by way of the non-directional antenna.

## Patentansprüche

1. Kollisionswarnsystem für Luftfahrzeuge zur Feststellung von mit Transpondern ausgerüsteten Luftfahrzeugen mit zwei in seitlichem Abstand an einem Luftfahrzeug montierten Antenneneinheiten (A1,A2 und B1,B2), einem Abfragesender (11), der wiederholt Abfragesignale über mindestens eines der Antennensysteme in den vor dem Luftfahrzeug befindlichen Luftraum aussendet, einem Empfänger (12), der zum Empfang und zur Verarbeitung von die beiden Antennen erreichenden Antwortsignalen eingerichtet ist, um in Abhängigkeit von der Verzögerung zwischen einem Abfragesignal und einem zugehörigen Anwortsignal eine Bereichsinformation und in Abhängigkeit von den relativen Phasenlagen der Antwortsignale an den beiden Antennen eine Azimutinformation zu liefern, **dadurch gekennzeichnet,** daß das System zum Zusammenarbeiten in Verbindung mit IFF-Transpondern geeignet ist, wobei der Abfragesender (11) und der Empfänger derart ausgebildet sind, daß sie jeweils solche IFF-Transponder triggern bzw. Antwortsignale von ihnen feststellen, und daß das System weiterhin eine Wiedergabeeinrichtung (14) aufweist, welche auf die Bereichs- und Azimutinformation anspricht und die Position eines Luftfahrzeugs im Luftraum vor dem Luftfahrzeug anzeigt, welches Anlaß zu dem Antwortsignal gegeben hat und eine mögliche Kollisionsgefahr darstellt.

2. System nach Anspruch 1, bei dem jedes Antennensystem zumindest einen Haifischflossenstrahler (A1,A2 und B1,B2) aufweist.

3. System nach Anspruch 1 oder 2, bei dem jede Antenneneinheit eine Mehrzahl von in Längsabstand befindlichen Strahlern (A1,A2 und B1,B2) mit Speiseleitungsverzögerungseinrichtungen (16) aufweist derart, daß die zugehörigen Signale im Antennenkanal in Phase gebracht werden.

4. System nach Anspruch 1, 2 oder 3, bei welchem der Empfänger eine Korrelatorschaltung (22) enthält, welche die von den beiden Antennen-Einheiten kommmenden HF-Signale verarbeitet und gleichphasige und quadraturphasige Ausgangssignale proportional zu Sinus und Kosinus des Azimutwinkels liefert.

5. System nach einem der Ansprüche 1 bis 4 mit einer Alarmvorrichtung, welche einen Aufmerksamkeitsalarm gibt, wenn eine Kollisionsgefahr besteht.

6. System nach Anspruch 5, **dadurch gekennzeichnet,** daß die Alarmvorrichtung einen hörbaren Alarm gibt.

7. System nach einem der Ansprüche 1 bis 6, bei welchem das Luftfahrzeug weiterhin mit einer nichtrichtenden Antenne (C) ausgerüstet ist und der Abfragesender einen Abfrageimpuls (P1,P3) über das Summendiagramm der beiden Antennen-Einheiten (A1,A2 und B1,B2) und einen Seitenkeulen- Unterdrückungskontrollimpuls (P2) über die nichtrichtende Antenne sendet.

**Revendications**

1. Système avertisseur de collision fonctionnant pour détecter des aéronefs équipés de répondeurs, comprenant deux unités d'antennes espacées latéralement (A1, A2 et B1, B2) montées sur un aéronef, un émetteur interrogateur (11) agencé pour émettre de façon répétée des signaux d'interrogation au moyen d'au moins une des unités d'antennes dans l'espace aérien situé en avant de l'aéronef, un récepteur (12) agencé pour recevoir et traiter des réponses de répondeur atteignant les deux unités d'antennes de manière à fournir des informations dépendant du retard entre un signal d'interrogation et une réponse à celui-ci, et des informations de gisement dépendant des phases relatives de la réponse au niveau des deux antennes caractérisé en ce que le système est adapté pour fonctionner conjointement avec des répondeurs d'identification IFF, l'émetteur interrogateur (11) et le récepteur (12) étant configurés pour déclencher et détecter respectivement les réponses de tels répondeurs d'identification IFF, le système comprenant en outre des moyens d'affichage (14) sensibles aux informations de distance et de gisement pour montrer la position d'un aéronef dans l'espace aérien situé en avant de l'aéronef, qui a donné lieu à une réponse et constitue un risque de collision.

2. Système selon la revendication 1, dans lequel chaque unité d'antennes comprend au moins une antenne "en aileron de requin" (A1, A2, B1, B2).

3. Système selon la revendication 1 ou 2, dans lequel chaque unité d'antennes comprend une pluralité d'antennes espacées longitudinalement (A1, A2 et B1, B2) avec des retards (16) dans les lignes d'alimentation tels qu'ils mettent les signaux correspondants en phase dans la voie de l'antenne.

4. Système selon la revendication 1, 2 ou 3, dans lequel le récepteur comprend un réseau corrélateur (22) qui traite les signaux à haute fréquence issu des deux unités d'antennes pour fournir des signaux de sortie en phase et en quadrature proportionnels au sinus et au cosinus de l'angle de gisement.

5. Système selon l'une quelconque des revendications 1 à 4, comprenant des moyens d'alarme qui fournissent une alarme alertant l'équipage lorsqu'un risque de collision existe.

6. Système selon la revendication 5, dans lequel les moyens d'alarme fournissent une alarme audible.

7. Système selon l'une quelconque des revendications 1 à 6, dans lequel l'aéronef est en outre équipé d'une antenne non directive (C) et l'émetteur interrogateur émet une impulsion d'interrogation (P1, P3) sur le diagramme somme des deux unités d'antennes (A1, A2 et B1, B2) et une impulsion de commande de suppression des lobes secondaires (P2) au moyen de l'antenne non directive.

FIG.1

$$\phi = \frac{2\pi S}{\lambda} \sin\theta$$

FIG 2

FIG.3

RF HEAD
UNIT
CHANNEL A

RF HEAD
UNIT
CHANNEL B

FIG.4

RF INPUT (B)

RF INPUT (A)

90°   _24_   _23_   _23_

_25_   _25_

_26_   _26_

_27_   _27_

Q OUTPUT
(SIN θ)

I OUTPUT
(COS θ)

FIG.5

FIG.6

VIDEO (COS θ) → cos/sin ANGLE EVALUATOR → ANGLE (4)

VIDEO (SIN θ) →

28

PROCESSED VIDEO

TARGET DATA

DECODER → CODE (12)
→ RANGE (7)
→ MODE (2)

29

RANGE → RANGE GATE

33

35

RAM

DEFRUITER

34

CORRELATED TRANSPONDER REPLY

STORE TARGET DATA LOGIC

32

FIFO TARGET STORE (500 MAX.)

30

31

16 BIT MICROPROCCESOR

CONTROL OUTPUTS    DISPLAY OUTPUT

FIG.7

FIG.8